# EUROPEAN PATENT SPECIFICATION

(11) **EP 3 761 239 B1**
(45) Date of publication and mention of the grant of the patent: **19.11.2025**
(21) Application number: 19305888.0
(22) Date of filing: 01.07.2019
(51) Int. Cl.: G06N 3/048, G06N 3/084, G06N 5/01, G06N 7/01, G06N 20/10

(54) **DEVICES AND METHODS FOR LATTICE POINTS ENUMERATION**
VORRICHTUNGEN UND VERFAHREN ZUR GITTERPUNKTAUFZÄHLUNG
DISPOSITIFS ET PROCÉDÉS D'ÉNUMÉRATION DE POINTS DE RÉSEAU

(43) Date of publication of application: 06.01.2021
(73) Proprietor: Institut Mines-Telecom, 91120 Palaiseau (FR)
(72) Inventor: REKAYA, Ghaya, 92160 Antony (FR); ASKRI, Aymen, 75013 Paris (FR)
(74) Representative: Atout PI Laplace

(56) References cited:
- US-A1- 2008 313 252
- US-A1- 2018 357 530
- US-A1- 2018 367 192
- MOSTAFA MOHAMMADKARIMI ET AL: "Deep Learning-Based Sphere Decoding", 6 July 2018 (2018-07-06), pages 1 - 9, XP055654677, Retrieved from the Internet <URL:https://arxiv.org/pdf/1807.03162.pdf> [retrieved on 20200102], DOI: 10.1109/TWC.2019.2924220
- CORLAY VINCENT ET AL: "Multilevel MIMO Detection with Deep Learning", 2018 52ND ASILOMAR CONFERENCE ON SIGNALS, SYSTEMS, AND COMPUTERS, IEEE, 28 October 2018 (2018-10-28), pages 1805 - 1809, XP033521232, DOI: 10.1109/ACSSC.2018.8645519
- KHSIBA MOHAMED-ACHRAF ET AL: "Sphere decoder with dichotomic search", 2017 IEEE 28TH ANNUAL INTERNATIONAL SYMPOSIUM ON PERSONAL, INDOOR, AND MOBILE RADIO COMMUNICATIONS (PIMRC), IEEE, 8 October 2017 (2017-10-08), pages 1 - 7, XP033321512, ISBN: 978-1-5386-3529-2, [retrieved on 20180214], DOI: 10.1109/PIMRC.2017.8292617

## Description

### TECHNICAL FIELD

The invention generally relates to computer science and in particular to methods and devices for solving the problem of lattice points enumeration in infinite lattices.

### BACKGROUND

Lattices are efficient tools that have many applications in several fields such as computer sciences, coding theory, digital communication and storage, and cryptography, as disclosed for example Mostafa Mohammadkarimi ET AL: "Deep Learning-Based Sphere Decoding",6 July 2018 (2018-07-06), pages 1-9, XP055654677, DOI:10.1109/TWC.2019.2924220.

In computer sciences, lattices are used for example to construct integer linear programming algorithms used to factor polynomials over the rationals and to solve systems of polynomial equations.

In coding theory, lattices are used for example to construct efficient error correcting codes and efficient algebraic space-time codes for data transmission over noisy channels or data storage (e.g. in cloud computing systems). Signal constellations having lattice structures are used for signal transmission over both Gaussian and single-antenna Rayleigh fading channels.

In digital communications, lattices are used for example in the detection of coded or uncoded signals transmitted over wireless multiple-input multiple-output channels.

In cryptography, lattices are used for example for the construction of secure cryptographic primitives resilient to attacks, especially in post-quantum cryptography and for the proofs-of-security of major cryptographic systems. Exemplary lattice-based cryptosystems comprise encryption schemes (e.g. GGH encryption scheme and NTRUEEncrypt), signatures (e.g. GGH signature scheme), and hash functions (e.g. SWIFFT and LASH for lattice-based hash function).

Lattice problems are a class of optimization problems related to lattices. They have been addressed since many decades and include the shortest vector problem (SVP), the closest vector problem (CVP), and the lattice point enumeration problem. In practical applications, such lattice problems arise for example in data detection in wireless communication systems, in integer ambiguity resolution of carrier-phase GNSS in positioning systems, and for the construction or the proofs-of-security of cryptographic algorithms.

A lattice of dimension *n* ≥ 1 is a regular infinite arrangement of points in a *n-*dimensional vector space *V,* the vector space being given a basis denoted *B* and a norm denoted *N.* In geometry and group theory, 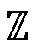 lattices are subgroups of the additive group ${ℝ}^{n}$ which span the real vector space ${ℝ}^{n}$. This means that for any basis of ${ℝ}^{n}$, the subgroup of all linear combinations with integer coefficients of the basis vectors forms a lattice. Each lattice point represents in the vector space *V* a vector of *n* integer values.

Solving the shortest vector problem in a n-dimensional lattice *L* over a vector space *V* of a basis *B* and a norm *N* consists in finding the shortest non-zero vector in the lattice *L* as measured by the norm *N.* Exemplary techniques for solving the shortest vector problem under the Euclidean norm comprise:
- lattice enumeration disclosed for example in "R. Kannan, Improved Algorithms for Integer Programming and related Lattice Problems, In Proceedings of the Fifeteenth Annual ACM Symposium on Theory of Computing, pages 193-206";
- random sampling reduction disclosed for example in "C. P. Schnorr, Lattice Reduction by Random Sampling and Birthday Methods, In Proceedings of Annual Symposium on Theoretical Aspects of Computer Science, pages 145-156, Springer, 2003";
- lattice sieving disclosed for example in "M. Ajtai, R. Kumar, and D. Sivakumar, A Sieve Algorithm for the Shortest Lattice Vector Problem, In Proceedings of the Thrity-third Annual ACM Symposium on Theory of Computing, pages 601-610, 2001";
- computing the Voronoi cell of the lattice disclosed for example in "D. Micciancio and P. Voulgaris, A deterministic Single Exponential Time Algorithm for Most Lattice Problems based on Voronoi Cell Computations, SIAM Journal on Computing, vol. 42, pages 1364-1391", and
- discrete Gaussian sampling disclosed for example in "D. Aggrawal, D. Dadush, O. Regev, and N. Stephens-Davidwowitz, Solving the Shortest Vector Problem in 2n time Using Discrete Gaussian Sampling, In Proceedings of the Forty-seventh Annual ACM Symposium on Theory of Computing, pages 733-742, 2013".

Lattice enumeration and random sampling reduction require super exponential time and memory. Lattice sieving, computing the Voronoi Cell of the lattice, and discrete Gaussian sampling require high computational complexity scaling polynomially in the lattice dimension.

Solving the closest vector problem in a n-dimensional lattice *L* over a vector space *V* of a basis *B* and a metric *M* consists of finding the vector in the lattice *L* that is the closest to a given vector *v* in the vector space *V* (not necessarily in the lattice *L*), as measured by the metric *M*. Exemplary techniques used to solve the closest vector problem comprise the Fincke and Pohst variant disclosed in "U. Fincke and M. Pohst, Improved Methods for Calculating Vectors of Short Length in a Lattice, Including a Complexity Analysis".

Lattice points enumeration in a n-dimensional lattice *L* over a vector space *V* of a basis *B* and a metric *M* consists of counting the lattice points (i.e. determining the number of lattice points) that lie inside a given n-dimensional bounded region denoted *S* (a ball or a sphere) in the vector space *V.* The number of lattice points inside a sphere of dimension *n* is proportional to the volume of the sphere.

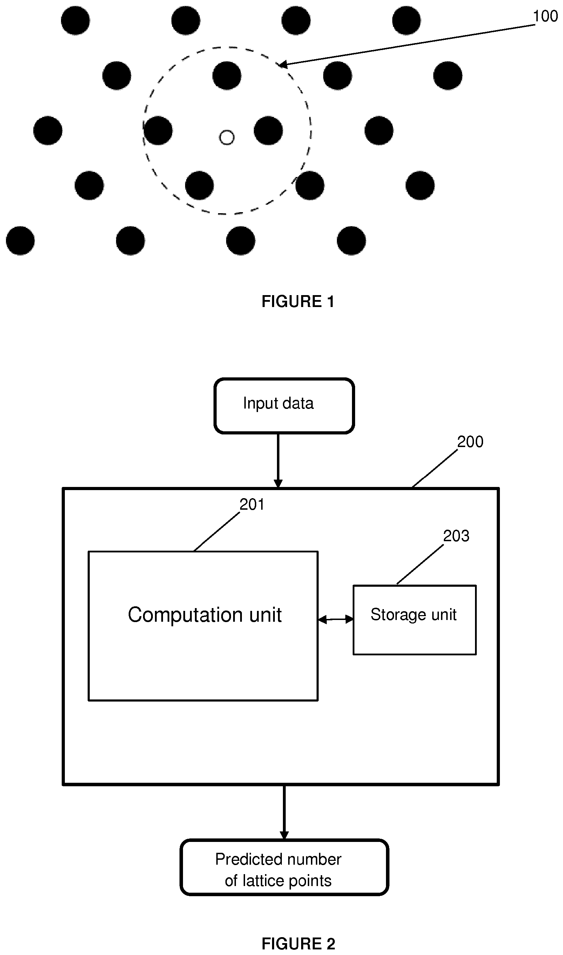

Figure 1 illustrates a two-dimensional lattice *L* in the vector space ${ℝ}^{2}$*.* The filled black circles refer to the lattice points that belong to the lattice *L*. The dashed-line circle 100 refers to a 2-dimensional sphere centered at the origin, designated by an empty circle, of the vector space ${ℝ}^{2}$ and contains four lattice points that lie inside the sphere.

The lattice points enumeration problem is deeply connected to the closest vector problem and the shortest vector problem, known to be NP-hard to solve exactly. Existing techniques require a high computational complexity that increases as a function of the lattice dimension, making their implementation in practical systems challenging.

There is accordingly a need for developing low-complexity and efficient techniques for solving lattice-related problems, including lattice points enumeration problems and closest vector problem.

### SUMMARY

In order to address these and other problems, there is provided a digital communication system, a computer-implemented method and a computer program product, as claimed in the independent claims. Additional features are defined in the dependent claims.

Advantageously, the embodiments of the invention enable solving the lattice enumeration problem with a reduced complexity.

Advantageously, the embodiments of the invention provide lattice point enumeration techniques that offer reliable results compared to existing bounds in literature.

### BRIEF DESCRIPTION OF THE DRAWINGS

The accompanying drawings, which are incorporated in and constitute a part of this specification, illustrate various embodiments of the invention.
Figure 1 illustrates an exemplary 2-dimensional lattice in the vector space ${ℝ}^{2}$.
Figure 2 is a block diagram illustrating the structure of a lattice prediction device, according to some embodiments of the invention.
Figure 3 illustrates a schematic diagram of a machine learning algorithm, according to some embodiments of the invention using deep neural networks.
Figure 4 is a flowchart illustrating a method for predicting a number of lattice points, according to some embodiments of the invention.
Figure 5 is a flowchart illustrating a method for determining deep neural network model parameters, according to some embodiments of the invention.
Figure 6 is a diagram illustrating error histograms evaluating the prediction errors during the training phase between the expected numbers of lattice points and the estimated values for lattices of dimension *n* = 5, according to some embodiments of the invention.
Figure 7 is a diagram illustrating error histograms evaluating the prediction errors during the training phase between the expected numbers of lattice points and the estimated values for lattices of dimension *n* = 10, according to some embodiments of the invention.
Figure 8 is a diagram illustrating the variation of normalized root mean squared deviation (NRMSD) values as function of the number of the hidden layers for two lattice dimensions *n* = 4 and *n* = 6 according to some embodiments of the invention.
Figures 9 is a diagram illustrating the performance of multilayer deep neural network for a lattice dimension equal to *n* = 5 considering respectively a training set, according to some embodiments of the invention.
Figures 10 is a diagram illustrating the performance of multilayer deep neural network for a lattice dimension equal to *n* = 5 considering respectively a test set, according to some embodiments of the invention.

### DETAILED DESCRIPTION

The embodiments of the invention provide a digital communication system, a computer-implemented method and a computer program product for predicting a number of lattice points that fall inside a bounded region in a given space vector with a reduced complexity using machine learning methods.

To facilitate the understanding of the embodiments of the invention, there follows some definitions and notations used hereinafter.

K refers to a field, i.e. an algebraic structure on which addition, subtraction, multiplication, and division operations are defined.

*V* refers to an n-dimensional (finite dimensional) *K*-vector space over the field *K.*

*B* = {*v*₁, ... , *vₙ*} designates a *K*-basis for the vector space *V.*

*N*(*.*) designates a norm for the vector space *V.*
*m*(*.*) designates a metric for the vector space *V.*

An *n*-dimensional lattice *K* lattice constructed over the vector space *V* designates a discrete subgroup of the vector space *V* generated by the non-unique lattice basis *B =* {*v*₁, ... , *vₙ*}. The lattice *Λ* is spanned by the *n* linearly independent vectors *v*₁, ... , *vₚ* and corresponds to the set given by: $Λ = \left\{u={\sum }_{i = 1}^{n} {a}_{i} {v}_{i} , {v}_{i} ∈ B ; {a}_{i} ∈ K\right\}$

The vectors *v*₁*,* ... , *vₚ* represent a non-unique lattice basis of the lattice *Λ*.

A lattice generator matrix, denoted *M* ∈ *V*^{*n*x*n*}, refers to a matrix whose column vectors represent a non-unique lattice basis of the lattice *Λ*.

A lattice point *u* that belongs to the lattice *Λ* refers to a *n*-dimensional vector, *u* ∈ *V,* that can be written as function of the lattice generator matrix *M* according to: $u = Ms , s ∈ K$

The shortest vector denoted by *uₘᵢₙ* refers to the non-zero vector in the lattice *Λ* that has the shortest length, denoted by *λₘᵢₙ* as measured by the norm *N,* such that: ${λ}_{min} = {min}_{u ∈ Λ \left\{O\right\}} N \left(u\right)$

The shortest vector problem refers to an optimization problem that aims at finding the shortest non-zero vector *uₘᵢₙ* in the vector space *V* that belongs to the lattice *Λ* and has the shortest length as measured by the norm *N.* The shortest vector problem remains to solve the optimization problem given by: ${u}_{min} = {argmin}_{u ∈ Λ \left\{O\right\}} N \left(u\right)$

The closest vector problem refers to an optimization problem that aims at finding, given a vector v in the vector space *V,* the vector *u* in the lattice *Λ* that is the closest to the vector v, the distance between the vector v and the vector *u* being measured by the metric m. The closest vector problem remains to solve the optimization problem given by: ${u}_{cvp} = {argmin}_{u ∈ Λ \left\{O\right\}} m \left(v-u\right)$

The lattice enumeration problem refers to an optimization problem that aims at counting (i.e. determining the number of) the lattice points that fall inside a bounded region in the vector space *V.* As lattice points correspond to vectors *u = Ms,* solving the lattice enumeration problem in a bounded region in the vector space *V* defined by a radius value r and centered at the origin, remains to enumerate the vectors *u* ∈ *Λ* that belong to the lattice *Λ* and have a metric *m(u)* that is smaller than or equal to the radius value r such that *m(u)* ≤ *r*.

The lattice enumeration problem is closely related to the shortest vector problem and the closest vector problem. For example, given the definitions of the corresponding optimization problems, solving the lattice enumeration problem when the radius value is equal to the shortest vector length may provide the number of lattice points that have shortest lengths. Besides, solving the lattice enumeration problem when the metric *m(u)* corresponds to a distance between a vector in the vector space and another vector that belongs to the lattice may provide the number of the closest vectors to the vector that belongs to the vector space that fall inside a given bounded region.

For 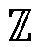 lattices constructed over the Euclidean space as a vector space $V = {ℝ}^{n}$*, Λ* represents an additive discrete subgroup of the Euclidean space ${ℝ}^{n}$. The lattice *Λ* is spanned by the *n* linearly independent vectors *v*₁, ... , *vₙ* of ${ℝ}^{n}$. The lattice *Λ* is accordingly given by the set of integer linear combinations according to: $Λ = \left\{u={\sum }_{i = 1}^{n} {a}_{i} {v}_{i} , {a}_{i} ∈ ℤ , {v}_{i} ∈ {ℝ}^{n}\right\}$

The lattice generator matrix $M ∈ {ℝ}^{n x n}$, refers to a real-value matrix that comprises real-value components ${M}_{ij} ∈ ℝ$. A lattice point *u* that belongs to the lattice *Λ* is a *n-*dimensional vector, $u ∈ {ℝ}^{n}$*,* that can be written as function of the lattice generator matrix *M* according to: $u = Ms , s ∈ {ℤ}^{n}$

**Exemplary** lattices comprise cubic or integer lattices $Λ = {ℤ}^{n}$*,* hexagonal lattices denoted *Aₙ*, and root lattices denoted *Dₙ* and *Eₙ*.

An exemplary norm for 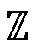 constructed over the Euclidean vector space $V = {ℝ}^{n}$ is the Euclidean norm denoted by (.) = ∥.∥₂ which defines the Euclidean metric (also referred to as 'the Euclidean distance') as the distance between two points in the Euclidean Space.

Solving the closest lattice point problem in 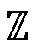 lattices constructed over the Euclidean space is equivalent to solving the optimization problem aiming at finding the least-squares solution to a system of linear equations where the unknown vector is comprised of integers, but the matrix coefficient and given vector are comprised of real numbers.

*D(K, θ*_{*k=*1}*_{,...,K}, σ*) refers to a multilayer deep neural network made up of an input layer and *K* ≥ 2 layers comprising one or more hidden layers and an output layer, and artificial neurons (hereinafter referred to as 'nodes' or 'computation nodes') connected to each other. The number of layers *K* represents the depth of the deep neural network and the number of nodes in each layer represents the width of the deep neural network. *N*^{(*k*)} designates the width of the *k^{th}* layer and corresponds to the number of computation nodes in the *k^{th}* layer.

The multilayer deep neural network is associated with model parameters denoted *θ*_{*k*=1,...,*K*} and an activation function denoted *σ.* The activation function *σ* refers to a computational non-linear function that defines the output of a neuron in the hidden layers of the multilayer deep neural network. The model parameters *θ*_{*k=*1,...*K*} comprise sets of parameters *θₖ* for *k =* 1, ... , *K,* the *k^{th}* set ${θ}_{k} = \left\{{W}^{\left(k\right)}∈{ℝ}^{{N}^{\left(k\right)} x {N}^{\left(k-1\right)}};{b}^{\left(k\right)}∈{ℝ}^{{N}^{\left(k\right)}}\right\}$ designating a set of layer parameters associated with the *k^{th}* layer of the multilayer deep neural network comprising:
- a first layer parameter, denoted by ${W}^{\left(k\right)} ∈ {ℝ}^{{N}^{\left(k\right)} x {N}^{\left(k-1\right)}}$*,* designating a weight matrix comprising real-value coefficients, each coefficient representing a weight value associated with a connection between a node that belongs to the *k^{th}* layer and a node that belongs to the *(k -* 1)*^{th}* layer;
- a second layer parameter, denoted by ${b}^{\left(k\right)} ∈ {ℝ}^{{N}^{\left(k\right)}}$*,* designating a vector of bias values associated with the *k^{th}* layer;
*L* designates a loss function and refers to a mathematical function used to estimate the loss (also referred to as 'the error' or 'cost') between estimated (also referred to as 'intermediate') and expected values during a training process of the deep neural network.

An optimizer (hereinafter referred to as 'an optimization algorithm' or 'a gradient descent optimization algorithm') refers to an optimization algorithm used to update parameters of the deep neural network during a training phase.

Epochs refer to the number of times the training data have passed through the deep neural network in the training phase.

A mini-batch refers to a sub-set of training data extracted from the training data and used in an iteration of the training phase. The mini-batch size refers to the number of training data samples in each partitioned mini-batch.

The learning rate (also referred to as 'a step size') of a gradient descent algorithm refers to a scalar value that is multiplied by the magnitude of the gradient.

The embodiments of the invention provide a digital communication system, a computer-implemented method and a computer program product that enable solving the lattice enumeration problem and can be used in combination with solving the closest vector problem and the shortest vector problem. Such lattice problems arise in several fields and applications comprising, without limitation, computer sciences, coding, digital communication and storage, and cryptography. The embodiments of the invention may accordingly be implemented in a wide variety of digital systems designed to store, process, or communicate information in digital form. Exemplary applications comprise, without limitations:
- digital electronics;
- communications (e.g. digital data encoding and decoding using lattice-structured signal constellations);
- data processing (e.g. in computing networks/systems, data centers);
- data storage (e.g. cloud computing);
- cryptography (e.g. to protect data and control and authenticate access to data, devices, and systems such as in car industry to ensure anti-thelf protection, in mobile phone devices to authenticate the control and access to batteries and accessories, in banking industry to secure banking accounts and financial transactions and data, in medicine to secure medical data and medical devices such as implantable medical devices, in sensitive applications in FPGA to ensure hardware security for electronic components);
- etc.

Exemplary digital systems comprise, without limitations:
- communication systems (e.g. radio, wireless, single-antenna communication systems, multiple-antenna communication systems, optical fiber-based communication systems);
- communication devices (e.g. transceivers in single-antenna or multiple-antenna devices, base stations, relay stations for coding in and/or decoding digital uncoded or coded signals represented by signal constellations, mobile phone devices, computers, laptops, tablets, drones, loT devices);
- storage systems and devices (e.g. could computing applications and cloud servers, mobile storage devices such as);
- cryptographic systems and devices used for communication, data processing, or storage (e.g. digital electronic devices such as RFID rags and electronic keys, smartcards, tokens used to store keys, smartcards readers such as Automated Teller Machines, and memory cards and hard discs with logon access monitored by cryptographic mechanisms) and implementing lattice-based encryption schemes (e.g. GGH encryption scheme and NTRUEEncrypt), lattice-based signatures (e.g. GGH signature scheme), and lattice-based hash functions (e.g. SWIFFT and LASH);
- integer programming systems/devices (e/g/ computers, quantum computers);
- positioning systems (e.g. in GNSS for integer ambiguity resolution of carrier-phase GNSS);
- etc.

The embodiments of the invention provide a digital communication system, a computer-implemented method and a computer program product for solving the lattice enumeration problem by predicting a number of lattice points inside a bounded region in a given vector space. The following description will be made with reference to 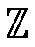 lattices constructed over the Euclidean space $V = {ℝ}^{n}$ for illustration purposes only. The skilled person will readily understand that the embodiments of the invention apply to any lattices constructed over any vector spaces. In the following, Λ represents a *n-*dimensional 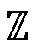 lattice constructed over the Euclidean space ${ℝ}^{n}$, the lattice *Λ* being defined by a lattice basis *B,* the Euclidean norm *N*(.) *=* ∥. ∥₂, the Euclidean metric *m(.),* and a lattice generator matrix $M ∈ {ℝ}^{n x n}$.

Referring to figure 2, there is provided a lattice prediction device 200 for predicting a number *N_{pred}* of lattice points *u* ∈ *Λ* in the finite dimensional lattice Λ that fall inside a bounded region denoted by *S* in a given vector space *V* over which is constructed the lattice *Λ*. The bounded region is defined by a radius value denoted r. The lattice *Λ* is defined by a lattice generator matrix $M ∈ {ℝ}^{n x n}$ comprising components denoted by *Mᵢⱼ* with the row and column indices *i* and *j* varying between 1 and *n.* Accordingly, counting the number of lattice points *N_{pred}* that fall inside the bounded region *S* of radius value r reduces to counting the number *N_{pred}* of lattice points *u* ∈ *Λ* that belong to the lattice *Λ* and have each a metric *m(u)* = ∥*u*∥₂ that is smaller than or equal to the radius value r such that ∥*u*∥₂ ≤ r.

The lattice prediction device 200 is implemented in digital data processing, communication, or storage devices or systems applied for digital data transmission, processing, or storage including, without limitation, the above mentioned digital systems and applications.

The embodiments of the invention rely on the use of artificial intelligence models and algorithms for solving the lattice enumeration problem. Accordingly, the lattice prediction device 200 comprises a computation unit 201 configured to receive the radius value *r* and the lattice generator matrix *M* and to determine a predicted number *N_{pred}* of lattice points by processing a machine learning algorithm, the machine learning algorithm being processed using input data derived from the radius value r and the components of the lattice generator matrix *M*. The lattice prediction device 200 may comprise a storage unit 203 configured to store the radius value r and the lattice generator matrix *M* and load their values to the computation unit 201.

The computation unit 201 is configured to perform a QR decomposition to the lattice generator matrix *M* = *QR,* which provides an upper triangular matrix $R ∈ {ℝ}^{n x n}$ and a unitary matrix $Q ∈ {ℝ}^{n x n}$. The computation unit 201 is configured to determine input data from the received radius value r and the components of the lattice generator matrix *M* by performing multiplication operation between each component of the upper triangular matrix and the inverse of the radius value. More specifically, referring to the components of the upper triangular matrix as *Rᵢⱼ* with *i* = 1, ...,n and *j* = 1, ...,n, the computation unit 201 may be configured to determine input data denoted by the vector ${x}_{0} = \left(\frac{1}{r}{R}_{ij ; 1 \leq i \leq j \leq n}\right)$, the vector *x*₀ comprising *N*⁽⁰⁾ = *n*² real-value inputs.

The machine learning algorithm takes as input the input vector ${x}_{0} = \left(\frac{1}{r}{R}_{ij ; 1 \leq i \leq j \leq n}\right)$ and delivers as output (also referred to as 'prediction') a predicted number *N_{pred}* of lattice points that fall inside a bounded region *S* of radius value r.

According to some embodiments, the machine learning algorithm may be a supervised machine learning algorithm that maps input data to predicted data using a function that is determined based on labeled training data that consists of a set of labeled input-output pairs. Exemplary supervised machine learning algorithms comprise, without limitation, Support Vector Machines (SVM), linear regression, logistic regression, naive Bayes, linear discriminant analysis, decision trees, k-nearest neighbor algorithm, neural networks, and similarity learning.

In preferred embodiments, the supervised machine learning algorithm may be a multilayer perceptron that is a multilayer feed-forward artificial neural network made up of at least three layers.

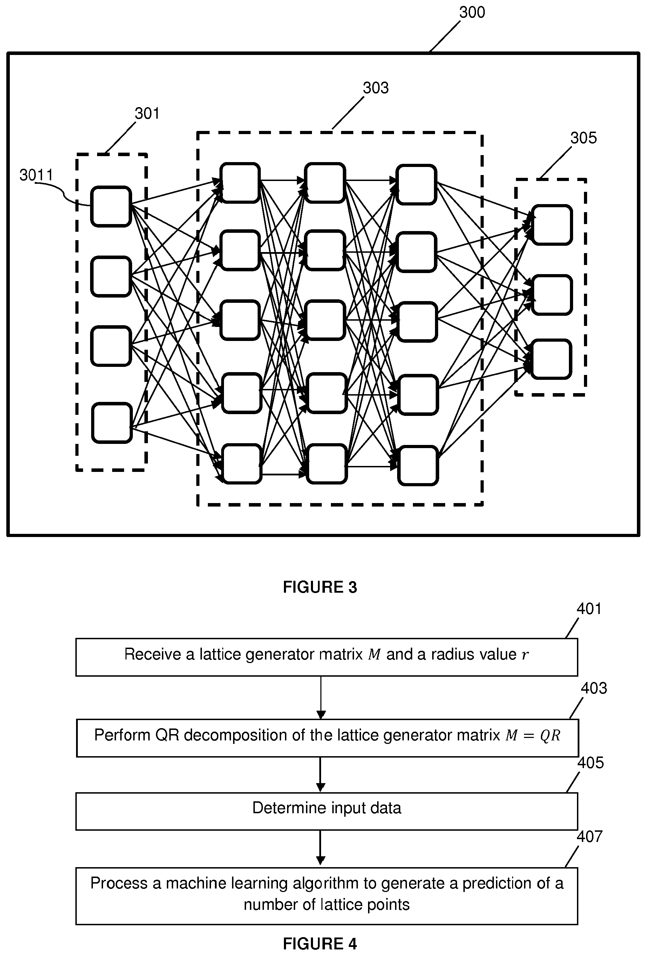

Referring to figure 3, a multilayer deep neural network *D(K, θ*_{*k=*1}*_{,...,K}, σ*) 300 made up of an input layer 301 and at least two layers (*K* ≥ 2) that comprise one or more hidden layers 303 and an output layer 305, is illustrated. Each layer among the input layer 301, the one or more hidden layers 303, and the output layer 305 comprises a plurality of artificial neurons or computation nodes 3011.

The multilayer deep neural network 300 is fully connected. Accordingly, each computation node in one layer connects with a certain weight to every computation node in the following layer, i.e. combines input from the connected nodes from a previous layer with a set of weights that either amplify or dampen the input values. Each layer's output is simultaneously the subsequent layer's input, starting from the input layer 301 that is configured to receive input data.

Except of the input computation nodes, i.e. the computation nodes 3011 in the input layer, each computation node 3011 comprised in the one or more hidden layers implements a non-linear activation function *σ* that maps the weighted inputs of the computation node to the output of the computation node.

According to the multilayer structure, the deep neural network defines a mapping $f \left({x}_{0}; θ\right) : {ℝ}^{{N}^{\left(0\right)}} ↦ {ℝ}^{{N}^{\left(K\right)}}$ that maps the input vector ${x}_{0} ∈ {ℝ}^{{N}^{\left(0\right)}}$ to an output vector denoted ${x}_{K} ∈ {ℝ}^{{N}^{\left(K\right)}}$ through *K* iterative processing steps, the *k ^{th}* layer among the *K* layers of the deep neural network carrying a mapping denoted by ${f}_{k} \left({x}_{k - 1}; {θ}_{k}\right) : {ℝ}^{{N}^{\left(k-1\right)}} ↦ {ℝ}^{{N}^{\left(k\right)}}$ that maps the input vector ${x}_{k - 1} ∈ {ℝ}^{{N}^{\left(k-1\right)}}$ received as input by the *k^{th}* layer, to the output vector ${x}_{k} ∈ {ℝ}^{{N}^{\left(k\right)}}$*.* The mapping at the *k ^{th}* layer depends on the input vector *x*_{*k-*1}, which corresponds to the output vector of the previous layer, and the set of parameters ${θ}_{k} = \left\{{W}^{\left(k\right)}∈{ℝ}^{{N}^{\left(k\right)} x {N}^{\left(k-1\right)}};{b}^{\left(k\right)}∈{ℝ}^{{N}^{\left(k\right)}}\right\}$ associated with the *k^{th}* layer. The mapping *fₖ*(*x*_{*k-*1};*θₖ*) associated with the *k^{th}* layer (except the input layer) can be expressed as: ${f}_{k} \left({x}_{k - 1}; {θ}_{k}\right) = σ \left({W}^{\left(k\right)}{x}_{k - 1}+{b}^{\left(k\right)}\right)$

The input-weight products performed at the computation nodes of the *k^{th}* layer are represented by the product function *W*^{(*k*)}*x*_{*k-*1} in equation (8) between the weight matrix *W*^{(*k*)} and the input vector *x*_{*k*-1} processed as input by the *k^{th}* layer, these input-weight products are then summed and the sum is passed through the activation function σ.

According to some embodiments, the activation function may be implemented in at least one computation node 3011 among the plurality of computation nodes of the one or more hidden layers 303.

According to some embodiments, the activation function may be implemented at each node of the hidden layers.

According to some embodiments, the activation function may be chosen in a group comprising a linear activation function, a sigmoid function, the Tanh, the softmax function, a rectified linear unit (ReLU) function, and the CUBE function.

The linear activation function is the identity function in which the signal does not change.

The sigmoid function converts independent variables of almost infinite range into simple probabilities between 0 and 1. It is a non-linear function that takes a value as input and outputs another value between '0' and '1'.

The tanh function represents the relationship between the hyperbolic sine and the hyperbolic cosine tanh(x)=sinh(x)/cosh(x).

The softmax activation generalizes the logistic regression and returns the probability distribution over mutually exclusive output classes. The softmax activation function may be implemented in the output layer of the deep neural network.

The ReLU activation function activates a neuron if the input of the neuron is above a given threshold. In particular, the given threshold may be equal to zero ('0'), in which case the ReLU activation function outputs a zero value if the input variable is a negative value and outputs the input variable according to the identity function if the input variable is a positive value. Mathematically, the ReLU function may be expressed as *σ*(*x*) = max(0, x).

According to some embodiments, the computation device 201 may be configured to previously determine and update the model parameters of the multilayer deep neural network during a training phase from training data. The training phase (also referred to as 'a learning phase') is a global optimization problem performed to adjust the model parameters *θ*_{*k=*1,...,*K*} in a way that enables minimizing a prediction error that quantifies how close the multilayer deep neural network is to the ideal model parameters that provide the best prediction. The model parameters may be initially set to initial parameters that may be, for example, randomly generated. The initial parameters are then updated during the training phase and adjusted in a way that enables the neural network to converge to the best predictions.

According to some embodiments, the multilayer deep neural network may be trained using back-propagation supervised learning techniques and uses training data to predict unobserved data.

The back-propagation technique is an iterative process of forward and backward propagations of information by the different layers of the multilayer deep neural network.

During the forward propagation phase, the neural network receives training data that comprises training input values and expected values (also referred to as 'labels') associated with the training input values, the expected values corresponding to the expected output of the neural network when the training input values are used as input. The expected values are known by the lattice prediction device 200 in application of supervised machine learning techniques. The neural network passes the training data across the entire multilayer neural network to determine estimated values (also referred to as 'intermediate values') that correspond to the predictions obtained for the training input values. The training data are passed in a way that all the computation nodes comprised in the different layers of the multilayer deep neural network apply their transformations or computations to the input values they receive from the computation nodes of the previous layers and send their output values to the computation nodes of the following layer. When data has crossed all the layers and all the computation nodes have made their computations, the output layer delivers the estimated values corresponding to the training data.

The last step of the forward propagation phase consists in comparing the expected values associated with the training data with the estimated values obtained when the training data was passed through the neural network as input. The comparison enables measuring how good/bad the estimated values were in relation to the expected values and to update the model parameters with the purpose of approaching the estimated values to the expected values such that the prediction error (also referred to 'estimation error' or 'cost') is near to zero. The prediction error may be estimated using a loss function based on a gradient procedure that updates the model parameters in the direction of the gradient of an objective function.

The forward propagation phase is followed with a backward propagation phase during which the model parameters, for instance the weights of the interconnections of the computation nodes 3011, are gradually adjusted in reverse order by applying an optimization algorithm until good predictions are obtained and the loss function is minimized.

First, the computed prediction error is propagated backward starting from the output layer to all the computation nodes 3011 of the one or more hidden layers 303 that contribute directly to the computation of the estimated values. Each computation node receives a fraction of the total prediction error based on its relative contribution to the output of the deep neural network. The process is repeated, layer by layer, until all the computation nodes in the deep neural network have received a prediction error that corresponds to their relative contribution to the total prediction error. Once the prediction error is spread backward, the layer parameters, for instance the first layer parameters (i.e. the weights) and the second layer parameters (i.e. the biases), may be updated by applying an optimization algorithm in accordance to the minimization of the loss function.

According to some embodiments, the computation unit 201 may be configured to update the model parameters during the training phase according to a 'batch gradient descent approach' by computing the loss function and updating the model parameters for the entire training data.

According to some embodiments, the computation unit 201 may be configured to update the model parameters during the training phase according to online learning by adjusting the model parameters for each sample of the training data. Using online learning, the loss function is evaluated for each sample of the training data. Online learning is also referred to as 'online training' and 'stochastic gradient descent'.

According to other embodiments, the computation unit 201 may be configured to update the model parameters during the training phase from training data according to mini-batch learning (also referred to as mini-batch gradient descent') using mini-batches of data, a mini-batch of data of size *s_{b}* is a subset of *s_{b}* training samples. Accordingly, the computation unit 201 may be configured to partition the training data into two or more batches of data of size *s_{b},* each batch comprising *s_{b}* samples of input data. The input data is then passed through the network in batches. The loss function is evaluated for each mini-batch of data passed through the neural network and the model parameters are updated for each mini-batch of data. The forward propagation and backward propagation phases are accordingly performed for each mini-batch of data until the last batch.

According to some embodiments, the computation unit 201 may be configured to pass all the training data through the deep neural network 300 in the training process a plurality of times, referred to as epochs. The number of epochs may be increased until an accuracy metric evaluating the accuracy of the training data starts to decrease or continues to increase (for example when a potential overfitting is detected).

The received training data denoted $x * = \left(\frac{1}{r}{R}_{ij ; 1 \leq i \leq j \leq n}\right)$ may comprise *Nbₛ* training samples denoted *S* = {*x**^{,1}, ....,*x***^{,Nb^{s}}*} that depend on the components of the upper triangular matrix R derived from the lattice generator matrix *M* and the radius value *r.*

Based on supervised learning, the training samples may be labeled, i.e. associated with known expected output values (also referred to as 'targets' or 'labels') that correspond to the output of the deep neural network when the training samples are used as inputs of the deep neural network. More specifically, each sample *x**^{,*m*} for *m* = 1, ...,*Nbₛ* may be associated with an expected value ${N}_{exp}^{∗ , m}$ of number of lattice points that fall inside the bounded region of radius r.

According to some embodiments in which mini-batch learning is used, the computation unit 201 may be configured to determine (update or adjust) the model parameters during a training phase in mini-batches extracted from the received training data. In such embodiments, the computation unit 201 may be configured to partition the received training data into a plurality *NB* of sets of training data denoted *x*⁽***^{,1)}*,x*⁽*^{,2)}*,* ... , *x*⁽*^{,*NB*)}*,* a set of training data being a mini-batch of size *s_{b}* comprising a set of *s_{b}* training examples from the training data, i.e. each mini-batch x⁽*^{,*l*)} comprises *s_{b}* samples *x**^{,*m*} with *m* varying between 1 and *Nbₛ.* A mini-batch *x*⁽*^{,*l*)} is also designated by *Sₗ* with training samples extracted from the *Nbₛ* training samples, that is *Sₗ* ⊂ *S.*

Each mini-batch *x*⁽*^{,*l*)} for *l =* 1, ... , *NB* may be associated with a target value that corresponds to an expected number ${N}_{exp}^{\left(∗,l\right)}$ of lattice points that is expected to be obtained by the deep neural network when the mini-batch of data *x*⁽*^{,*l*)} is used as input of the deep neural network. The sets of training data and the target values may be grouped into vector pairs such that each vector pair denoted ( ${x}^{\left(∗,l\right)} , {N}_{exp}^{\left(∗,l\right)}$) corresponds to the training examples and target values of the *l^{th}* mini-batch.

Given the training data and the expected output values, the computation unit 201 may be configured to perform the forward propagation and backward propagation phases of the training process.

Based on mini-batch training, the training phase may comprise two or more processing iterations. At each processing iteration, the computation unit 201 may be configured to:
- process the deep neural network using a mini-batch *x*⁽*^{,*l*)} among the plurality of training sets as input, which provides an intermediate number of lattice points denoted ${N}_{est}^{\left(∗,l\right)}$ associated with the mini-batch *x*⁽*^{,*l*)}. The intermediate number of lattice points ${N}_{est}^{\left(∗,l\right)}$ is predicted at the output layer of the multilayer deep neural network;
- compute a loss function denoted $L \left({N}_{exp}^{\left(∗,l\right)}, {N}_{est}^{\left(∗,l\right)}\right)$ for the processed mini-batch *x*⁽*^{,*l*)} from the expected number ${N}_{exp}^{\left(∗,l\right)}$ of lattice points associated with the mini-batch *x*⁽*^{,*l*)} and the intermediate number of lattice points ${N}_{est}^{\left(∗,l\right)}$ determined by processing the mini-batch of data *x*⁽***^{*,l*)};
- determine updated model parameters after processing the mini-batch *x*⁽*^{,*l*)} according to the minimization of the loss function $L \left({N}_{exp}^{\left(∗,l\right)}, {N}_{est}^{\left(∗,l\right)}\right)$ by applying an optimization algorithm. More specifically, the computation unit 201 may be configured to determine updated first layer parameters ${W}^{\left(k\right)} ∈ {ℝ}^{{N}^{\left(k\right)} x {N}^{\left(k-1\right)}}$ and updated second layer parameters ${b}^{\left(k\right)} ∈ {ℝ}^{{N}^{\left(k\right)}}$ associated with each of the *K* layers of the multilayer deep neural network *D*(*K, θ*_{*k*=1,...}*_{K},σ*)*,* the first layer parameters and the second layer parameters corresponding respectively to the weights associated with the connections between the neurons of the deep neural network and the bias values.

For the first processing iteration, the computation unit 201 may be configured to determine initial model parameters that will be used during the forward propagation phase of the first processing iteration of the training process. More specifically, the computation unit 201 may be configured to determine initial first layer parameters ${W}^{\left(k, init\right)} ∈ {ℝ}^{{N}^{\left(k\right)} x {N}^{\left(k-1\right)}}$ and initial second layer parameters ${b}^{\left(k, init\right)} ∈ {ℝ}^{{N}^{\left(k\right)}}$ associated with each of the K layers of the multilayer deep neural network *D(K, θ*_{*k=*1}*_{,...,K}, σ*)*.*

According to some embodiments, the computation unit 201 may be configured to determine initial first layer parameters and initial second layer parameters associated with the different layers of the deep neural network randomly from a random set of values, for example following a standard normal distribution.

According to some embodiments, the optimization algorithm used to adjust the model parameters and determine updated model parameters may be chosen in a group comprising the Adadelta optimization algorithm, the Adagrad optimization algorithm, the adaptive moment estimation algorithm (ADAM) that computes adaptive learning rates for each model parameter, the Nesterov accelerated gradient (NAG) algorithm, the Nesterov-accelerated adaptive moment estimation (Nadam) algorithm, the RMSprop algorithm, stochastic gradient optimization algorithms, and adaptive learning rate optimization algorithms.

According to some embodiments, the loss function considered to evaluate the prediction error or loss may be chosen in a group comprising a mean square error function (MSE) that is used for linear regression, and the exponential log likelihood (EXPLL) function used for Poisson regression.

According to some embodiments in which the mean square error function is used, the loss function computed for the *l^{th}* mini-batch of data may be expressed as: $L \left({N}_{exp}^{\left(∗,l\right)}, {N}_{est}^{\left(∗,l\right)}\right) = \frac{1}{{s}_{b}} {\sum }_{m ∈ {S}_{l}} {\left({N}_{exp}^{∗ , m}-{N}_{est}^{∗ , m}\right)}^{2}$

According to some embodiments, the computation unit 201 may be configured to previously determine the expected numbers of lattice points ${N}_{exp}^{\left(∗,l\right)}$ associated with each mini-batch *Sₗ* for *l =* 1*, ..., NB* from the radius value r and the lattice generator matrix *M* by applying a list sphere decoding algorithm or a list SB-Stack decoding algorithm. The list sphere decoding (LSD) algorithm and the list SB-Stack decoding algorithm are sphere-based decoding algorithms implemented to solve the closest vector problem. They output a list of the codewords that lie inside a given bounded region of a given radius. More details on the LSD implementations are disclosed in "M. El-Khamy et al., Reduced Complexity List Sphere Decoding for MIMO Systems, Digital Signal Processing, Vol. 25, Pages 84-92, 2014".

Referring to figure 4, there is also provided a lattice prediction method for predicting a number *N_{pred}* of lattice points *u* ∈ *Λ* in a finite dimensional lattice Λ that fall inside a bounded region denoted by S in a given vector space *V* over which the lattice Λ is constructed. The bounded region is defined by a radius value *r.* Λ represents a *n*-dimensional 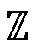 lattice constructed over the Euclidean space ${ℝ}^{n}$, the lattice Λ being defined by a lattice basis *B*, the Euclidean norm *N*(.) *=* ∥. ∥₂, the Euclidean metric *m(.),* and a lattice generator matrix $M ∈ {ℝ}^{n x n}$ comprising components *Mᵢⱼ* with the row and column indices *i* and *j* varying between 1 and *n.* Predicting the number of lattice points *N_{pred}* that fall inside the bounded region *S* of radius value *r* reduces to predicting the number *N_{pred}* of lattice points *u* ∈ *Λ* that belong to the lattice Λ and have each a metric *m(u)* = ∥*u*∥₂ that is smaller than or equal to the radius value *r* such that ∥*u*∥₂ ≤ *r*.

At step 401, a lattice generator matrix $M ∈ {ℝ}^{n x n}$ and a radius value *r* may be received.

At step 403, a QR decomposition may be performed to the lattice generator matrix *M* = *QR,* which provides an upper triangular matrix $R ∈ {ℝ}^{n x n}$ and a unitary matrix $Q ∈ {ℝ}^{n x n}$.

At step 405, input data may be determined from the received radius value *r* and the components of the lattice generator matrix *M* by performing multiplication operation between each component of the upper triangular matrix and the inverse of the radius value, which provides an input data vector ${x}_{0} = \left(\frac{1}{r}{R}_{ij ; 1 \leq i \leq j \leq n}\right)$ comprising *N*⁽⁰⁾ = *n*² real-value inputs.

At step 407, a predicted number *N_{pred}* of lattice points that fall inside a bounded region *S* of radius value *r* may be determined by processing a machine learning algorithm that takes as input data the input vector ${x}_{0} = \left(\frac{1}{r}{R}_{ij ; 1 \leq i \leq j \leq n}\right)$.

According to some embodiments, the machine learning algorithm may be a supervised machine learning algorithm chosen in a group, comprising without limitation, Support Vector Machines, linear regression, logistic regression, naive Bayes, linear discriminant analysis, decision trees, k-nearest neighbor algorithm, neural networks, and similarity learning.

In preferred embodiments, the supervised machine learning algorithm may be a multilayer perceptron that is a multilayer feed-forward artificial neural network *D(K, θ*_{*k=*1}*_{,...,K},σ*) made up of an input layer and at least two layers (*K* ≥ 2) comprising one or more hidden layers and an output layer, and associated with model parameters *θ*_{*k*=1,...,*K*} and an activation function *σ,* the model parameters *θ*_{*k*=1,...,*K*} comprising sets of layer parameters ${θ}_{k} = \left\{{W}^{\left(k\right)}∈{ℝ}^{{N}^{\left(k\right)} x {N}^{\left(k-1\right)}};{b}^{\left(k\right)}∈{ℝ}^{{N}^{\left(k\right)}}\right\}$*,* each set of layer parameters comprising a first layer parameter *W*^{(*k*)} and a second layer parameter *b*^{(*k*)}*.*

According to some embodiments, the activation function may be chosen in a group comprising a linear activation function, a sigmoid function, the Tanh, the softmax function, a rectified linear unit (ReLU) function, and the CUBE function.

According to some embodiments in which the machine learning algorithm is a multilayer deep neural network, step 407 may comprise a sub-step that is performed to determine updated model parameters according to a back-propagation supervised training or learning process that uses training data to train the multilayer deep neural network.

According to some embodiments, the model parameters may be updated during the training process according to a 'batch gradient descent approach' by computing a loss function and updating the model parameters for the entire training data.

According to some embodiments, the model parameters may be updated during the training process according to online learning by adjusting the model parameters for each sample of the training data and computing a loss for each sample of the training data.

According to other embodiments, the model parameters may be updated during the training process from training data according to mini-batch learning using mini-batches of data, a mini-batch of data of size *s_{b}* is a subset of *s_{b}* training samples. Accordingly, the training data may be partitioned into two or more mini-batches of data of size *s_{b},* each batch comprising *s_{b}* samples of the input data. The input data is then passed through the network in mini-batches. A loss function is evaluated for each mini-batch of data and the model parameters are updated for each mini-batch of data.

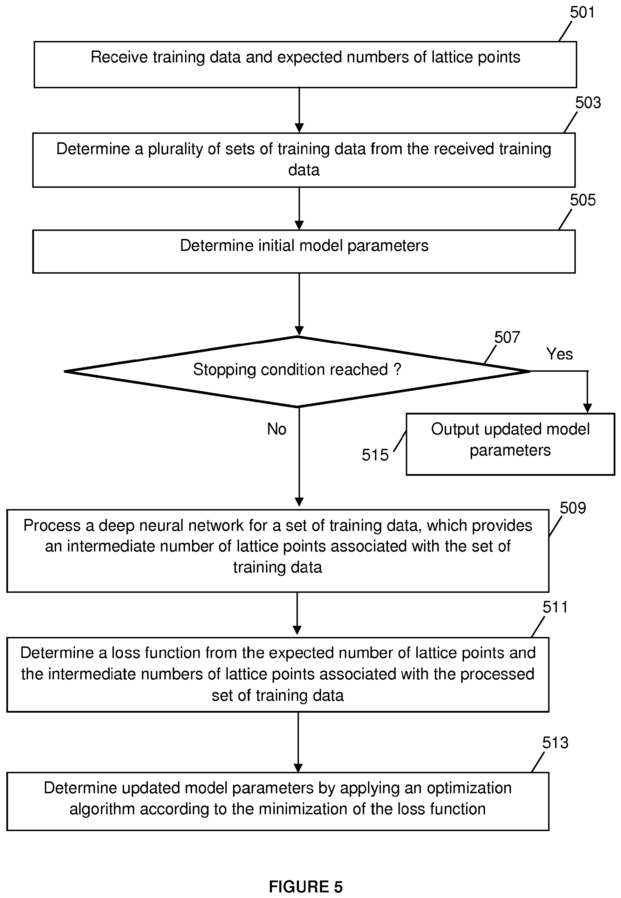

Figure 5 is a flowchart depicting a method for training the multilayer deep neural network *D*(*K, θ*_{*k=*1}*_{,...,K},σ*) in order to determine the model parameters *θ*_{*k*=1,...,*K*} that provide the best prediction in terms of the minimization of the prediction error according to some embodiments using mini-batch learning.

At step 501, training data $x * = \left(\frac{1}{r}{R}_{ij ; 1 \leq i \leq j \leq n}\right)$ comprising *Nbₛ* training samples *S* = {*x**^{*,*1}*,* ... . , *x*^{,Nb^{s}}*} and expected numbers of lattice points ${N}_{exp}^{∗ , 1} , … , {N}_{exp}^{∗ , {Nb}_{S}}$ may be received, each sample *x**^{,*m*} for m *= 1, ...,Nbₛ* being associated with an expected value ${N}_{exp}^{∗ , m}$ of number of lattice points that fall inside the bounded region of radius *r* that corresponds to the expected output or prediction of the multilayer deep neural network when the sample *x**^{,*m*} is the input of the neural network.

At step 503, training data may be partitioned into a plurality *NB* of sets of training data *x*⁽***^{,1)}*, x*⁽***^{,2)}*,* ... , *x*⁽***^{,*NB*)}*,* a set of training data being a mini-batch of size *s_{b}* comprising a set of *s_{b}* training examples extracted from the training data. Each mini-batch *x*⁽***^{,*l*)}*,* for *l =* 1*,* ... , *NB* may be associated with an expected number ${N}_{exp}^{\left(∗,l\right)}$ of lattice points that is expected to be obtained by the deep neural network when the mini-batch of data *x*⁽***^{,*l*)}*,* is used as input of the deep neural network. The sets of training data and the expected values may be grouped into vector pairs such that each vector pair ( ${x}^{\left(∗,l\right)} , {N}_{exp}^{\left(∗,l\right)}$) corresponds to the training examples and target values of the *l^{th}* mini-batch.

The training process may comprise two or more processing iterations that are repeated until a stopping condition is reached. The stopping condition may be related to the number of processed mini-batches of training data and/or to goodness of the updated model parameters with respect to the minimization of the prediction errors resulting from the updated model parameters.

At step 505, a first processing iteration may be performed during which initial model parameters may be determined to be used to process the first mini-batch of data. More specifically, initial first layer parameters ${W}^{\left(k, init\right)} ∈ {ℝ}^{{N}^{\left(k\right)} x {N}^{\left(k-1\right)}}$ and initial second layer parameters ${b}^{\left(k, init\right)} ∈ {ℝ}^{{N}^{\left(k\right)}}$ associated with each of the K layers of the multilayer deep neural network *D(K, θ*_{*k=*1}*_{,...,K}, σ*) may be determined at step 505.

According to some embodiments, the initial first layer parameters and the initial second layer parameters associated with the different layers of the deep neural network may be determined randomly from a random set of values, for example following a standard normal distribution.

Steps 507 to 513 may be repeated for processing the mini-batches of data until the stopping condition is reached. A processing iteration of the training process consists of the steps 509 to 513 and relates to the processing of a mini-batch *x*⁽*^{,*l*)} among the plurality of training sets x⁽*^{,*l*)} for *l = 1,* ... ,*NB.*

At step 509, the multilayer deep neural network may be processed using a mini-batch *x*⁽*^{,*l*)} among the plurality of training sets as input, which provides an intermediate number of lattice points denoted ${N}_{est}^{\left(∗,l\right)}$ associated with the mini-batch ***x***⁽*^{,*l*)}. The intermediate number of lattice points ${N}_{est}^{\left(∗,l\right)}$ is predicted at the output layer of the multilayer deep neural network.

At step 511, a loss function $L \left({N}_{exp}^{\left(∗,l\right)}, {N}_{est}^{\left(∗,l\right)}\right)$ may be computed for the processed mini-batch *x*⁽*^{,*l*)} from the known expected number ${N}_{exp}^{\left(∗,l\right)}$ of lattice points associated with the mini-batch *x*⁽*^{,*l*)} and the intermediate number of lattice points ${N}_{est}^{\left(∗,l\right)}$ determined by processing the mini-batch of data *x*⁽*^{,*l*)} at step 509.

At step 513, updated model parameters may be determined after processing the mini-batch *x*⁽*^{,*l*)} according to the minimization of the loss function $L \left({N}_{exp}^{\left(∗,l\right)}, {N}_{est}^{\left(∗,l\right)}\right)$ by applying an optimization algorithm. More specifically, the first layer parameters ${W}^{\left(k\right)} ∈ {ℝ}^{{N}^{\left(k\right)} x {N}^{\left(k-1\right)}}$ and the second layer parameters ${b}^{\left(k\right)} ∈ {ℝ}^{{N}^{\left(k\right)}}$ associated with each of the *K* layers of the multilayer deep neural network *D(K, θ*_{*k=*1}*_{,...,K}, σ*) may be updated at step 513, the first layer parameters and the second layer parameters corresponding respectively to the weights associated with the connections between the neurons of the deep neural network and the bias values.

According to some embodiments, the optimization algorithm may be chosen in a group comprising the Adadelta optimization algorithm, the Adagrad optimization algorithm, the adaptive moment estimation algorithm, the Nesterov accelerated gradient algorithm, the Nesterov-accelerated adaptive moment estimation algorithm, the RMSprop algorithm, stochastic gradient optimization algorithms, and adaptive learning rate optimization algorithms.

According to some embodiments, the loss function may be chosen in a group comprising a mean square error function and the exponential log likelihood function.

According to some embodiments, step 501 may comprise determining expected number of lattice points ${N}_{exp}^{\left(∗,l\right)}$ associated with each mini-batch *Sₗ* for *l =* 1*,* ... , *NB* from the radius value *r* and the lattice generator matrix *M* by applying a list sphere decoding algorithm based on the Sphere Decoder or a list SB-Stack based on the SB-Stack decoder.

There is also provided a computer program product for predicting a number *N_{pred}* of lattice points *u* ∈ Λ in a finite dimensional lattice Λ that fall inside a bounded region *S* in a given vector space *V* over which the lattice Λ is constructed. The bounded region is defined by a radius value *r.* Λ represents a n-dimensional 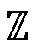 lattice constructed over the Euclidean space ${ℝ}^{n}$, the lattice Λ being defined by a lattice basis *B,* the Euclidean norm *N*(.) *=* ∥. ∥₂, the Euclidean metric *m(.),* and a lattice generator matrix $M ∈ {ℝ}^{n x n}$ comprising components *Mᵢⱼ* with the row and column indices *i* and *j* varying between 1 and *n.* The computer program product comprises a non-transitory computer readable storage medium and instructions stored on the non-transitory readable storage medium that, when executed by a processor, cause the processor to process a machine learning algorithm using input data derived from the radius value *r* and the components *Mᵢⱼ* of lattice generator matrix *M,* which provides a predicted number of lattice points *N_{pred}.*

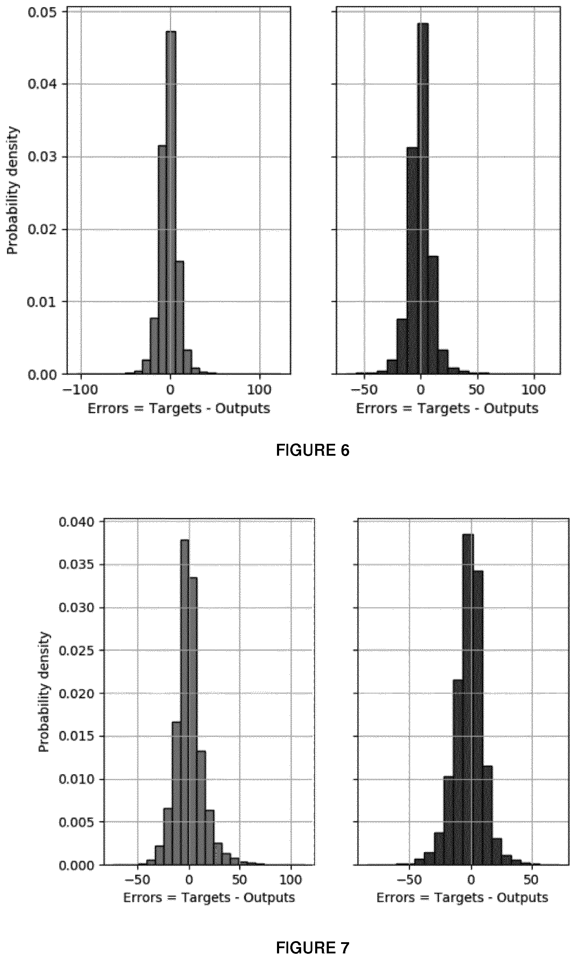

Performance of the provided lattice prediction devices and methods has been evaluated through several simulation experiments. Figures 6 to 10 are diagrams illustrating obtained results considering different lattice dimensions *n* varying from 2 to 10. Components *Mᵢⱼ* of the lattice generator matrix *M* are modeled as i.i.d. zero-mean Gaussian random variables with unit variance. The training data used for each lattice dimension comprises 50000 training samples. Mini-batch learning is considered for these simulation experiments for which the training samples are partitioned into *NB* = 2500 batches of size *s_{b}* = 20. The adaptive moment estimation (Adam) optimization algorithm with adaptive learning rate equal to 0.001 is used. The multilayer deep neural network is made up of an input layer that takes as input vector a vector of dimension *n*², up to 10 hidden layers, and an input layer that delivers as a prediction a predicted number of lattice points that fall inside the bounded region of a given radius. The number of computation nodes in the hidden layers depends on the lattice dimension and is chosen to be greater than or equal to the number of input variables.

Figures 6 and 7 are diagrams illustrating error histograms evaluating the prediction errors during the training phase between the expected numbers of lattice points and the estimated values during the training phase for lattices of dimensions *n* = 5 and *n* = 10, respectively. The diagrams of figures 6 and 7 show a high percentage of points on which the proposed prediction method provides accurate predictions.

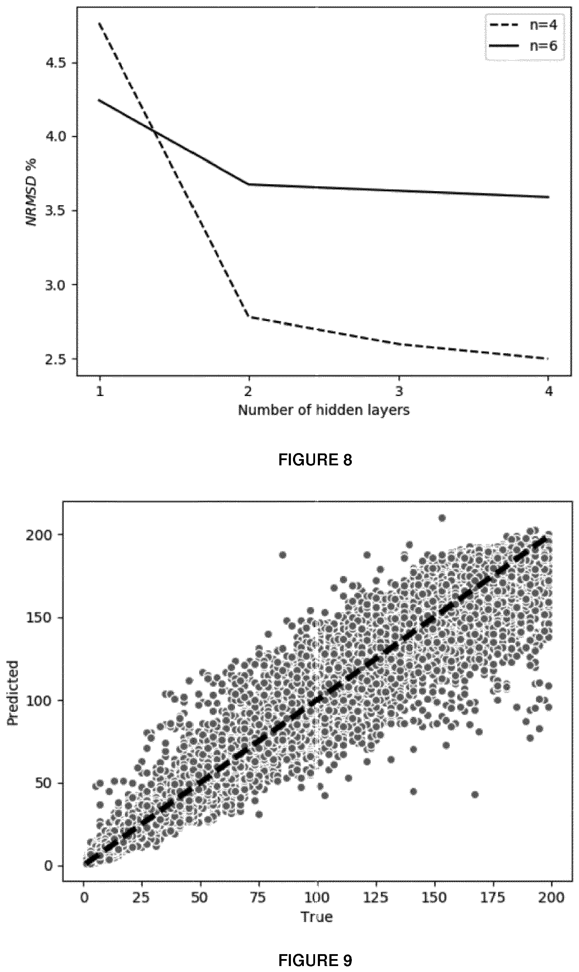

Figure 8 is a diagram illustrating the variation of normalized root mean squared deviation (NRMSD) values as function of the number of the hidden layers for two lattice dimensions *n* = 4 and *n* = 6. The normalized root mean squared deviation evaluates the ratio between the root mean squared deviation (used as a metric to evaluate the prediction error) and the mean value. Figure 8 shows that the NRMSD decreases as the number of the hidden layers increases, while a sufficient number of hidden layers equal to 3 is sufficient to achieve significant prediction accuracy.

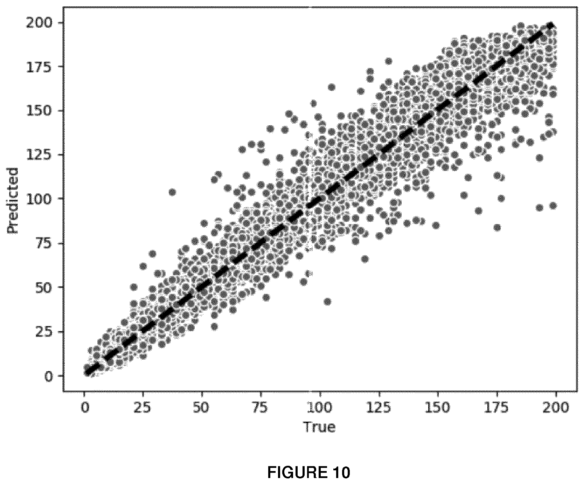

Figures 9 and 10 are diagrams illustrating the performance of multilayer deep neural network for a lattice dimension equal to *n* = 5 considering respectively a training set and a test set. The predicted output of the multilayer deep neural network is plotted versus the target output, i.e. the predicted number of lattice points is plotted versus the expected number of lattice points. Diagrams of figures 9 and 10 show that predicted numbers of lattice points are concentrated around the axis *y* = *x* for bounded regions (spheres) of small radius values. This indicates that the prediction model according to the embodiments of the invention fits the cardinality of lattice points and provides accurate predictions. Some accuracies may be also obtained for high radius values.

The devices, methods, and computer program products described herein may be implemented by various means. For example, these techniques may be implemented in hardware, software, or a combination thereof. For a hardware implementation, the processing elements of the lattice prediction device 200 can be implemented for example according to a hardware-only configuration (for example in one or more FPGA, ASIC, or VLSI integrated circuits with the corresponding memory) or according to a configuration using both VLSI and Digital Signal Processor (DSP).

Furthermore, the method described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

## Claims

1. A digital system for storing, processing, or communicating information in digital form comprising a lattice prediction device (200) for predicting a number of lattice points falling inside a bounded region in a given vector space, said bounded region being defined by a radius value, a lattice point representing a digital signal in a lattice constructed over said vector space, said lattice being defined by a lattice generator matrix comprising components, wherein the lattice prediction device (200) comprises a computation unit (201) configured to determine input data from said radius value and said components of lattice generator matrix and to determine a predicted number of lattice points by applying a machine learning algorithm to said input data,
wherein the computation unit (201) is configured to perform a QR decomposition of said lattice generator matrix which provides an upper triangular matrix, said computation unit (201) being configured to determine said input data by performing multiplication operation between each component of said upper triangular matrix and the inverse of said radius value,
wherein the digital system is a communication system, said predicted number of lattice points being used for the detection of coded or uncoded transmitted signals, or a lattice-based cryptographic system.

2. The digital system of claim 1, wherein the machine learning algorithm is a supervised machine learning algorithm chosen in a group comprising Support Vector Machines, linear regression, logistic regression, naive Bayes, linear discriminant analysis, decision trees, k-nearest neighbor algorithm, neural networks, and similarity learning.

3. The digital system of claim 2, wherein the supervised machine learning algorithm is a multilayer deep neural network (300) comprising an input layer (301), one or more hidden layers (303), and an output layer (305), each layer comprising a plurality of computation nodes (3011), said multilayer deep neural network (300) being associated with model parameters and an activation function, said activation function being implemented in at least one computation node (3011) among the plurality of computation nodes of said one or more hidden layers.

4. The digital system of claim 3, wherein said activation function is chosen in a group comprising a linear activation function, a sigmoid function, a Relu function, the Tanh, the softmax function, and the CUBE function.

5. The digital system of claim 3, wherein the computation unit (201) is configured to determine said model parameters during a training phase from received training data, said computation unit (201) being configured to determine a plurality of sets of training data from said training data and expected numbers of lattice points, each expected number of lattice points being associated with a set of training data among said plurality of sets of training data, said training phase comprising two or more processing iterations, at each processing iteration, the computation unit (201) being configured to:
- process said deep neural network (300) using a set of training data among said plurality of training data as input, which provides an intermediate number of lattice points associated with said set of training data;
- determine a loss function from the expected number of lattice points and the intermediate number of lattice points associated with said set of training data, and
- determine updated model parameters by applying an optimization algorithm according to the minimization of said loss function.

6. The digital system of claim 5, wherein said optimization algorithm is chosen in a group comprising the Adadelta optimization algorithm, the Adagrad optimization algorithm, the adaptive moment estimation algorithm, the Nesterov accelerated gradient algorithm, the Nesterov-accelerated adaptive moment estimation algorithm, the RMSprop algorithm, stochastic gradient optimization algorithms, and adaptive learning rate optimization algorithms.

7. The digital system of claim 5, wherein said loss function is chosen in a group comprising a mean square error function and an exponential log likelihood function.

8. The digital system of claim 5, wherein the computation unit (201) is configured to determine initial model parameters for a first processing iteration from a randomly generated set of values.

9. The digital system of claim 5, wherein said computation unit (201) is configured to previously determine said expected numbers of lattice points from said radius value and lattice generator matrix by applying a list sphere decoding algorithm or a list Spherical-Bound Stack decoding algorithm.

10. A computer-implemented method for storing, processing, or communicating information in digital form, the method comprising predicting a number of lattice points falling inside a bounded region in a given vector space, said bounded region being defined by a radius value, a lattice point representing a digital signal in a lattice constructed over said vector space, said lattice being defined by a lattice generator matrix comprising components, wherein the lattice prediction method comprises determining input data from said radius value and said components of lattice generator matrix and determining a predicted number of lattice points by applying a machine learning algorithm to said input data,
wherein the method comprises performing a QR decomposition of said lattice generator matrix which provides an upper triangular matrix, and said step of determining said input data comprises performing multiplication operation between each component of said upper triangular matrix and the inverse of said radius value,
wherein the method is implemented in a communication system, said predicted number of lattice points being used for the detection of coded or uncoded transmitted signals, or in a lattice-based cryptographic system.

11. A computer program product comprising instructions which, when the program is executed by a computer cause the computer to carry out the steps of claim 10.

## Patentansprüche

1. Digitales System zum Speichern, Verarbeiten oder Übermitteln von Informationen in digitaler Form, umfassend eine Gittervorhersagevorrichtung (200) zum Vorhersagen einer Anzahl von Gitterpunkten, die in einen begrenzten Bereich in einem gegebenen Vektorraum fallen, wobei der begrenzte Bereich durch einen Radiuswert definiert ist, ein Gitterpunkt ein digitales Signal in einem über dem Vektorraum konstruierten Gitter darstellt, wobei das Gitter durch eine Gittergeneratormatrix definiert ist, die Komponenten umfasst, wobei die Gittervorhersagevorrichtung (200) eine Recheneinheit (201) umfasst, die dazu konfiguriert ist, Eingabedaten aus dem Radiuswert und den Komponenten der Gittergeneratormatrix zu bestimmen und eine vorhergesagte Anzahl von Gitterpunkten durch Anwenden eines Maschinenlernalgorithmus auf die Eingabedaten zu bestimmen,
wobei die Recheneinheit (201) dazu konfiguriert ist, eine QR-Zerlegung der Gittergeneratormatrix durchzuführen, die eine obere Dreiecksmatrix bereitstellt, wobei die Recheneinheit (201) dazu konfiguriert ist, die Eingabedaten durch Durchführen einer Multiplikationsoperation zwischen jeder Komponente der oberen Dreiecksmatrix und dem Kehrwert des Radiuswerts zu bestimmen,
wobei das digitale System ein Kommunikationssystem, wobei die vorhergesagte Anzahl von Gitterpunkten zur Erkennung codierter oder uncodierter übertragener Signale verwendet wird, oder ein gitterbasiertes kryptografisches System ist.

2. Digitales System nach Anspruch 1, wobei der Maschinenlernalgorithmus ein überwachter Maschinenlernalgorithmus ist, der aus einer Gruppe ausgewählt wird, die Support Vector Machines, lineare Regression, logistische Regression, Naive Bayes, lineare Diskriminanzanalyse, Entscheidungsbäume, k-Nearest-Neighbor-Algorithmus, neuronale Netzwerke und Ähnlichkeitslernen umfasst.

3. Digitales System nach Anspruch 2, wobei der überwachte Maschinenlernalgorithmus ein mehrschichtiges tiefes neuronales Netzwerk (300) ist, das eine Eingabeschicht (301), eine oder mehrere verborgene Schichten (303) und eine Ausgabeschicht (305) umfasst, wobei jede Schicht eine Vielzahl von Berechnungsknoten (3011) umfasst, wobei das mehrschichtige tiefe neuronale Netzwerk (300) mit Modellparametern und einer Aktivierungsfunktion verknüpft ist, wobei die Aktivierungsfunktion in mindestens einem Berechnungsknoten (3011) unter der Vielzahl von Berechnungsknoten der einen oder mehreren verborgenen Schichten implementiert ist.

4. Digitales System nach Anspruch 3, wobei die Aktivierungsfunktion aus einer Gruppe ausgewählt wird, die eine lineare Aktivierungsfunktion, eine Sigmoidfunktion, eine Relu-Funktion, die Tanh-Funktion, die Softmax-Funktion und die CUBE-Funktion umfasst.

5. Digitales System nach Anspruch 3, wobei die Recheneinheit (201) dazu konfiguriert ist, die Modellparameter während einer Trainingsphase aus empfangenen Trainingsdaten zu bestimmen, wobei die Recheneinheit (201) dazu konfiguriert ist, eine Vielzahl von Trainingsdatensätzen aus den Trainingsdaten und erwarteten Anzahlen von Gitterpunkten zu bestimmen, wobei jede erwartete Anzahl von Gitterpunkten einem Trainingsdatensatz aus der Vielzahl von Trainingsdatensätzen zugeordnet ist, wobei die Trainingsphase zwei oder mehr Verarbeitungsiterationen umfasst, wobei die Recheneinheit (201) bei jeder Verarbeitungsiteration dazu konfiguriert ist:
- das tiefe neuronale Netzwerk (300) unter Verwendung eines Satzes von Trainingsdaten aus der Vielzahl von Trainingsdaten als Eingabe zu verarbeiten, der eine Zwischenanzahl von Gitterpunkten bereitstellt, die mit dem Satz von Trainingsdaten verknüpft sind;
- eine Verlustfunktion aus der erwarteten Anzahl von Gitterpunkten und der Zwischenanzahl von Gitterpunkten, die mit dem Satz von Trainingsdaten verknüpft sind, zu bestimmen, und
- aktualisierte Modellparameter durch Anwenden eines Optimierungsalgorithmus entsprechend der Minimierung der genannten Verlustfunktion zu bestimmen.

6. Digitales System nach Anspruch 5, wobei der Optimierungsalgorithmus aus einer Gruppe ausgewählt wird, die den Adadelta-Optimierungsalgorithmus, den Adagrad-Optimierungsalgorithmus, den adaptiven Momentschätzungsalgorithmus, den Nesterov-beschleunigten Gradientenalgorithmus, den Nesterov-beschleunigten adaptiven Momentschätzungsalgorithmus, den RMSprop-Algorithmus, stochastische Gradientenoptimierungsalgorithmen und adaptive Lernratenoptimierungsalgorithmen umfasst.

7. Digitales System nach Anspruch 5, wobei die Verlustfunktion aus einer Gruppe ausgewählt wird, die eine mittlere quadratische Fehlerfunktion und eine exponentielle Log-Likelihood-Funktion umfasst.

8. Digitales System nach Anspruch 5, wobei die Recheneinheit (201) dazu konfiguriert ist, anfängliche Modellparameter für eine erste Verarbeitungsiteration aus einem zufällig generierten Satz von Werten zu bestimmen.

9. Digitales System nach Anspruch 5, wobei die Recheneinheit (201) dazu konfiguriert ist, die erwarteten Anzahlen von Gitterpunkten aus dem Radiuswert und der Gittergeneratormatrix durch Anwenden eines List-Sphere-Decodieralgorithmus oder eines List-Spherical-Bound-Stack-Decodieralgorithmus vorab zu bestimmen.

10. Computerimplementiertes Verfahren zum Speichern, Verarbeiten oder Übermitteln von Informationen in digitaler Form, wobei das Verfahren Vorhersagen einer Anzahl von Gitterpunkten umfasst, die in einen begrenzten Bereich in einem gegebenen Vektorraum fallen, wobei der begrenzte Bereich durch einen Radiuswert definiert ist, ein Gitterpunkt ein digitales Signal in einem über dem Vektorraum konstruierten Gitter darstellt, wobei das Gitter durch eine Gittergeneratormatrix definiert ist, die Komponenten umfasst, wobei das Gittervorhersageverfahren Bestimmen von Eingabedaten aus dem Radiuswert und den Komponenten der Gittergeneratormatrix und Bestimmen einer vorhergesagten Anzahl von Gitterpunkten durch Anwenden eines Maschinenlernalgorithmus auf die Eingabedaten umfasst,
wobei das Verfahren Durchführen einer QR-Zerlegung der Gittergeneratormatrix umfasst, die eine obere Dreiecksmatrix bereitstellt, und der Schritt zum Bestimmen der Eingabedaten Durchführen einer Multiplikationsoperation zwischen jeder Komponente der oberen Dreiecksmatrix und dem Kehrwert des Radiuswerts umfasst,
wobei das Verfahren in einem Kommunikationssystem, wobei die vorhergesagte Anzahl von Gitterpunkten zur Erkennung codierter oder uncodierter übertragener Signale verwendet wird, oder in einem gitterbasierten kryptografischen System implementiert wird.

11. Computerprogrammprodukt, das Anweisungen umfasst, die, wenn das Programm von einem Computer ausgeführt wird, bewirken, dass der Computer die Schritte von Anspruch 10 ausführt.

## Revendications

1. Système numérique de stockage, de traitement ou de communication d'informations sous forme numérique, comprenant un dispositif de prédiction de réseau (200) permettant de prédire un nombre de points de réseau situés dans une région délimitée d'un espace vectoriel donné, ladite région délimitée étant définie par une valeur de rayon, un point de réseau représentant un signal numérique dans un réseau construit sur ledit espace vectoriel, ledit réseau étant défini par une matrice génératrice de réseau comprenant des composants, dans lequel le dispositif de prédiction de réseau (200) comprend une unité de calcul (201) configurée pour déterminer des données d'entrée à partir de ladite valeur de rayon et desdits composants de la matrice génératrice de réseau, et pour déterminer un nombre prédit de points de réseau en appliquant un algorithme d'apprentissage automatique auxdites données d'entrée,
dans lequel l'unité de calcul (201) est configurée pour effectuer une décomposition QR de ladite matrice génératrice de réseau qui fournit une matrice triangulaire supérieure, ladite unité de calcul (201) étant configurée pour déterminer lesdites données d'entrée en effectuant une opération de multiplication entre chaque composant de ladite matrice triangulaire supérieure et l'inverse de ladite valeur de rayon,
dans lequel le système numérique est un système de communication, ledit nombre prédit de points de réseau étant utilisé pour la détection de signaux transmis codés ou non codés, ou un système cryptographique basé sur un réseau.

2. Système numérique selon la revendication 1, dans lequel l'algorithme d'apprentissage automatique est un algorithme d'apprentissage automatique supervisé choisi dans un groupe comprenant les machines à vecteurs de support, la régression linéaire, la régression logistique, le Bayes naïf, l'analyse discriminante linéaire, les arbres de décision, l'algorithme des k plus proches voisins, les réseaux neuronaux et l'apprentissage par similarité.

3. Système numérique selon la revendication 2, dans lequel l'algorithme d'apprentissage automatique supervisé est un réseau neuronal profond multicouche (300) comprenant une couche d'entrée (301), une ou plusieurs couches cachées (303) et une couche de sortie (305), chaque couche comprenant une pluralité de nœuds de calcul (3011), ledit réseau neuronal profond multicouche (300) étant associé à des paramètres de modèle et à une fonction d'activation, ladite fonction d'activation étant mise en œuvre dans au moins un nœud de calcul (3011) parmi la pluralité de nœuds de calcul de ladite une ou plusieurs couches cachées.

4. Système numérique selon la revendication 3, dans lequel ladite fonction d'activation est choisie dans un groupe comprenant une fonction d'activation linéaire, une fonction sigmoïde, une fonction Relu, la fonction Tanh, la fonction softmax et la fonction CUBE.

5. Système numérique selon la revendication 3, dans lequel l'unité de calcul (201) est configurée pour déterminer lesdits paramètres de modèle pendant une phase d'entraînement à partir des données d'entraînement reçues, ladite unité de calcul (201) étant configurée pour déterminer une pluralité d'ensembles de données d'entraînement à partir desdites données d'entraînement et du nombre attendu de points de réseau, chaque nombre attendu de points de réseau étant associé à un ensemble de données d'entraînement parmi ladite pluralité d'ensembles de données d'entraînement, ladite phase d'entraînement comprenant deux itérations de traitement ou plus, à chaque itération de traitement, l'unité de calcul (201) étant configurée pour :
- traiter ledit réseau neuronal profond (300) en utilisant un ensemble de données d'entraînement parmi ladite pluralité de données d'entraînement en tant qu'entrée, ce qui fournit un nombre intermédiaire de points de réseau associés audit ensemble de données d'entraînement ;
- déterminer une fonction de perte à partir du nombre attendu de points de réseau et du nombre intermédiaire de points de réseau associés audit ensemble de données d'entraînement, et
- déterminer les paramètres de modèle mis à jour en appliquant un algorithme d'optimisation en fonction de la minimisation de ladite fonction de perte.

6. Système numérique selon la revendication 5, dans lequel ledit algorithme d'optimisation est choisi dans un groupe comprenant l'algorithme d'optimisation Adadelta, l'algorithme d'optimisation Adagrad, l'algorithme d'estimation de moment adaptatif, l'algorithme de gradient accéléré de Nesterov, l'algorithme d'estimation de moment adaptatif accéléré de Nesterov, l'algorithme RMSprop, les algorithmes d'optimisation de gradient stochastique et les algorithmes d'optimisation de taux d'apprentissage adaptatif.

7. Système numérique selon la revendication 5, dans lequel ladite fonction de perte est choisie dans un groupe comprenant une fonction d'erreur quadratique moyenne et une fonction de vraisemblance logarithmique exponentielle.

8. Système numérique selon la revendication 5, dans lequel l'unité de calcul (201) est configurée pour déterminer des paramètres de modèle initiaux pour une première itération de traitement à partir d'un ensemble de valeurs générées de manière aléatoire.

9. Système numérique selon la revendication 5, dans lequel ladite unité de calcul (201) est configurée pour déterminer au préalable lesdits nombres attendus de points de réseau à partir de ladite valeur de rayon et de ladite matrice génératrice de réseau en appliquant un algorithme de décodage sphérique par liste ou un algorithme de décodage par pile à limite sphérique par liste.

10. Procédé mis en œuvre par ordinateur pour stocker, traiter ou communiquer des informations sous forme numérique, le procédé comprenant une prédiction d'un nombre de points de réseau se trouvant à l'intérieur d'une région délimitée dans un espace vectoriel donné, ladite région délimitée étant définie par une valeur de rayon, un point de réseau représentant un signal numérique dans un réseau construit sur ledit espace vectoriel, ledit réseau étant défini par une matrice génératrice de réseau comprenant des composants, dans lequel le procédé de prédiction de réseau comprend la détermination de données d'entrée à partir de ladite valeur de rayon et desdites composantes de la matrice génératrice de réseau et la détermination d'un nombre prédit de points de réseau par application d'un algorithme d'apprentissage automatique auxdites données d'entrée,
dans lequel le procédé comprend une réalisation d'une décomposition QR de ladite matrice génératrice de réseau qui fournit une matrice triangulaire supérieure, et ladite étape de détermination desdites données d'entrée comprend une opération de multiplication entre chaque composant de ladite matrice triangulaire supérieure et l'inverse de ladite valeur de rayon,
dans lequel le procédé est mis en œuvre un système de communication, ledit nombre prédit de points de réseau étant utilisé pour la détection de signaux transmis codés ou non codés, ou un système cryptographique basé sur un réseau.

11. Produit de programme informatique comprenant des instructions qui, lorsque le programme est exécuté par un ordinateur, amènent l'ordinateur à effectuer les étapes de la revendication 10.
